Europäisches Patentamt

(19) European Patent Office

Office européen des brevets

(11) Publication number: **0 248 500**
**B1**

(12) **EUROPEAN PATENT SPECIFICATION**

(45) Date of publication of the patent specification:
06.09.89

(21) Application number: **87201060.8**

(22) Date of filing: **04.06.87**

(51) Int. Cl.⁴: **B 62 B 3/10**

(54) **Mobile device for the transportation of heavy objects, in particular roll of hard floor-covering.**

(30) Priority: **06.06.86 NL 8601481**

(43) Date of publication of application:
**09.12.87 Bulletin 87/50**

(45) Publication of the grant of the patent:
**06.09.89 Bulletin 89/36**

(84) Designated Contracting States:
**AT BE CH DE ES FR GB IT LI LU NL SE**

(56) References cited:
**DE-C- 411 091**
**FR-A- 728 435**
**GB-A- 120 657**
**US-A- 1 577 954**
**US-A- 1 913 295**
**US-A- 3 191 786**

(73) Proprietor: **Forbo-Krommenie B.V., Industrieweg 12,
NL-1566 JP Assendelft (NL)**

(72) Inventor: **Hoekstra, Hendrik Christiaan Adolf, Van
Leeuwehoeksingel 25, NL-2611 AA Delft (NL)**
Inventor: **Krommenhoek, Menno Cornelis, Nieuw
Huizen 19A, NL-4811 TK Breda (NL)**
Inventor: **van der Mars, Petrus Gerardus Maria, Isaac
Hoorbeekstraat 37, NL-2613 HG Delft (NL)**
Inventor: **van der Voet, Jan-Paul Cornelis,
Hoefkesstraat 51, NL-5611 RL Eindhoven (NL)**
Inventor: **Nijpjes, Peter, Paulusberg 5, NL-4615 LA
Bergen op Zoom (NL)**

(74) Representative: **van der Beek, George Frans, Ir. et al,
Nederlandsch Octrooibureau Scheveningseweg 82 P.O.
Box 29720, NL-2502 LS 's-Gravenhage (NL)**

## Description

The invention relates to a hand-driven mobile device for the transportation of heavy objects, in particular a roll of hard floor-covering, such as linoleum, comprising an underframe supported by at least three wheels and having an oblong-shaped carrying frame, for an object to be fastened therein, said carrying frame having at one head end a supporting face for the object, and said carrying frame being supported in tilting fashion, but lockable in a forward and backward direction in the underframe.

Such a device is known from GB-A-120657, whereby the carrying frame is fastened to the underframe by means of two parallel links, between pivots on the carrying frame and pivots on the underframe.

This means that during transport the carrying frame is resting on the underframe upon the pivot on the underframe and upon a second abutment of the underframe.

When the known device has reached the workplace the carrying frame is tilted around the pivot on the underframe and the supporting face for the roll is moving towards the ground. In this position the carrying frame can be tilted until the carrying frame is in the upward position and the roll can be removed from the supporting face of the carrying frame.

If the ground is not even this position is not very stable.

The device according to the invention is characterized in that the carrying frame is supported not only in tilting fashion, but also in sliding fashion in the underframe, so that in a particular tilted position a horizontal edge of the supporting face of the carrying frame can be brought into contact with the ground and forms an axis of rotation, in such a way that on further tilting of the carrying frame the latter slides relative to the underframe.

In this way a device is obtained which not only facilitates the transportation of such heavy loads and gives rise to no risk, but which can also be used for unrolling the roll of hard floor-covering at the workplace.

From US-A-3,191,786 a hand-driven mobile device supported by four wheels for transportation and unrolling a roll of hard floor-covering is known. This is a very complicated device whereby cables are used and the wheel axles can move with respect to each other.

The invention will be explained in greater detail with reference to the drawings, in which

Fig. 1 shows a perspective rear view of the device according to the invention, intended for a roll of hard floor-covering;

Figs. 2 to 6 show schematic views indicating the working of the device at various stages; and

Fig. 7 indicates the displacement of the centre of gravity of the roll at the various stages.

In the figures the underframe is indicated by A, the carrying frame by B, a roll of hard floor-covering for transportation by C, and the operator by D.

The underframe A comprises a frame which rests on four wheels 1. Two of these are preferably self-adjusting.

The frame comprises essentially two identical parts 2 connected by one or more crossbars 3.

The carrying frame B is oblong-shaped and forms, as it were, a carrying cradle for a roll C.

The carrying frame B comprises parallel bars or rods 4, crossbars or rods 5, gripping handles 6, and a supporting face 7 at the bottom end.

Disposed in the "bottom" of the carrying frame B are lengthwise-running rollers 8, parallel to the bars or rods 4. These rollers 8 will be described below.

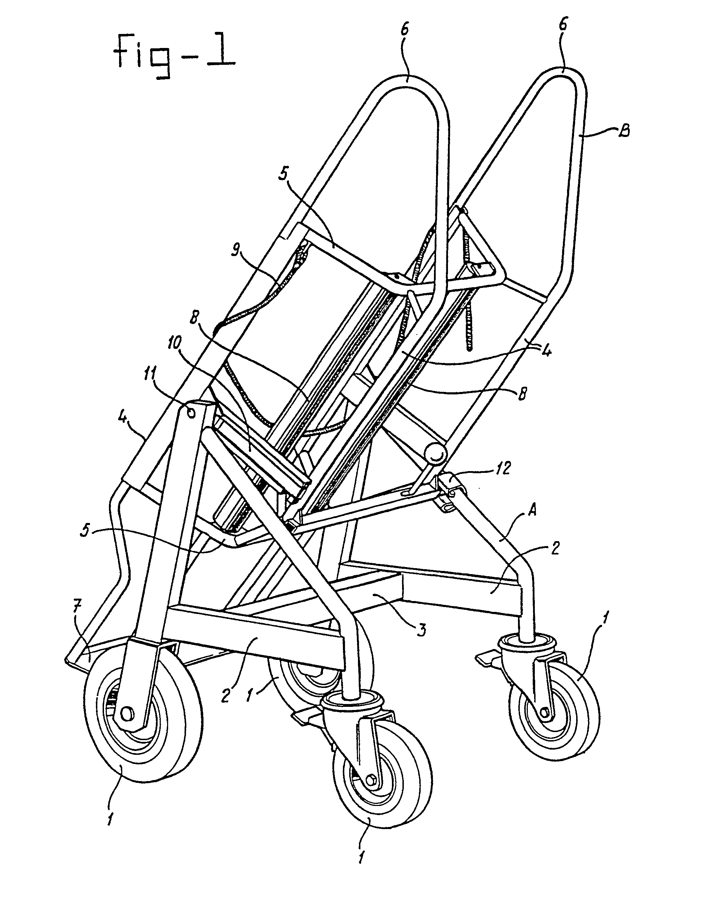

Fig. 1 also shows a fixing strap 9 for a roll C.

In the two "side walls" of the carrying frame B there are parallel guides 10, in which can move slide blocks 11 which are hingedly connected to the top end of the underframe A.

Fig. 1 also shows a hand-operated locking device 12 for fixing the carrying frame B to the underframe A with the slide blocks 11 in the position relative to the guides 10 shown in Fig. 1.

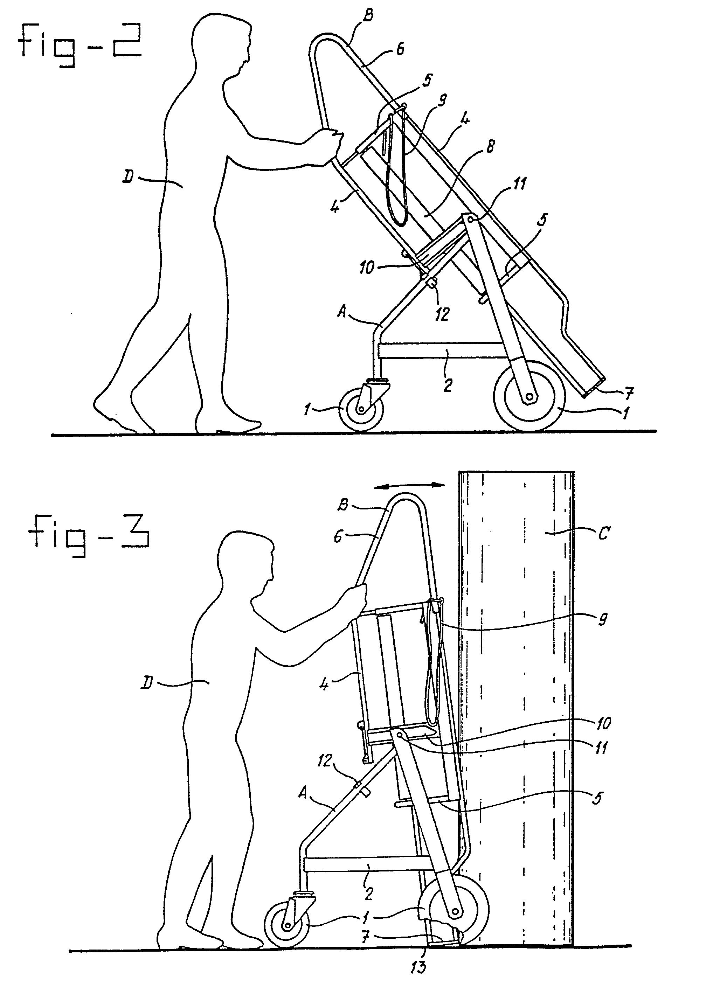

Fig. 2 shows the transporting position for picking up a roll C, where the carrying frame B is fixed by the means 12 relative to the underframe A.

In Fig. 3 one has arrived at the roll C, which is standing on its end on the floor. If the roll C is hard floor-covering, the length is 2,000 mm, the diameter is generally 400 mm, while the weight can be 300 kg.

The device according to the invention is not intended for so-called soft floor-coverings, such as carpet, because the latter is not rigid enough in the lengthwise direction, and the length is generally about 4,000 mm, so-called room-width carpet.

In Fig. 3 the lock 12 is released, so that the carrying frame B can be moved relative to the underframe A, while the guides 10 are displaced relative to the stationary slide blocks 11, until the bottom edge of the carrying frame B comes into contact with the ground.

The carrying frame B then pivots about this edge 13 in the forward direction until the supporting face 7 is resting flat on the ground. The carrying frame B is then standing vertical. The carrying frame B thus has two different axes of rotation, the slide blocks 11 and the edge 13.

As we said, the roll C stands vertical in Fig. 3. In order to permit placing of the roll C on the supporting face, the roll C is tilted forward a little by hand (see Fig. 7) from position (a) to position (b). Fig. 7 also shows the centres of gravity of the roll C: a' and b'. b' lies hardly any higher than a', so that it is very easy to tilt the roll C from position (a) to position (b).

The supporting face 7 is pushed under the roll C, and the roll C is tilted back to position (a) and fixed by means of the fixing strap 9.

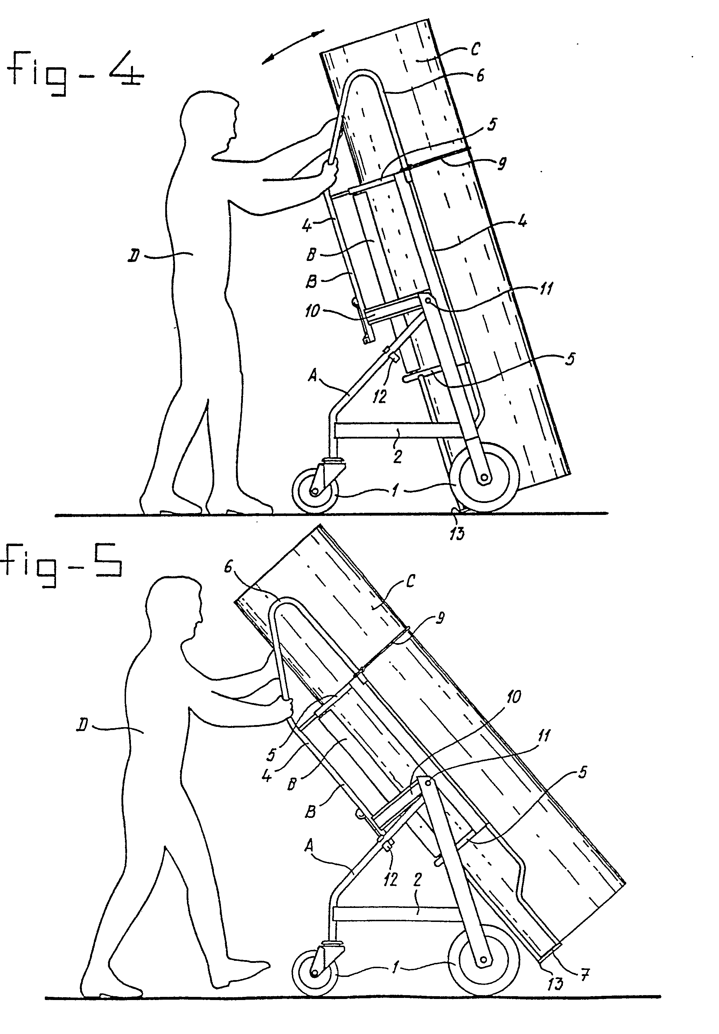

The carrying frame B with the roll C is tilted back about the pivot pin 13 (see Fig. 4) until the position of Fig. 5 is reached and the lock 12 comes into operation again.

The positions of the roll C in Figs. 4 and 5 correspond to the positions (c) and (d) in Fig. 7, with the centres of gravity c' and d'.

It can be seen from Fig. 7 that the centre of gravity of the roll C in the vertical position hardly changes position.

In the position shown in Fig. 5 the roll C is being taken to the workplace. This can be, for example, the floor of a room in a utility building, such as a hospital.

In the position shown in Fig. 3 the rolls C can be brought in by a lorry or the like.

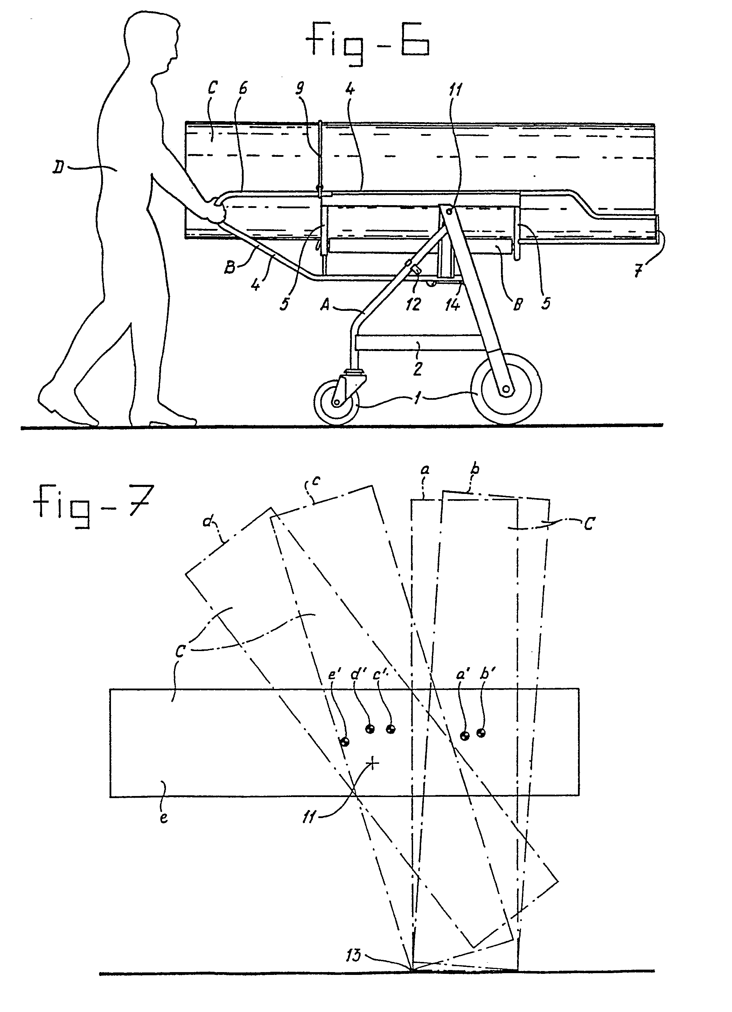

Once at the workplace, the lock 12 is released by hand, allowing the carrying frame to tilt about the pivot pin 11 to an essentially horizontal position (see Fig. 6 and position (e) in Fig. 7), with centre of gravity e'.

In the position shown in Fig. 6 part of the carrying frame B comes to rest against the underframe A. A stop 14, which prevents further tilting of the carrying frame B, is thus formed.

In this position the roll C can be taken to any desired room, and the roll C can easily be unrolled. This unrolling is made easier by the earlier-mentioned rollers 8.

It goes without saying that the device according to the invention can also be used in stores and the like, where heavy rolls have to be moved. The device is also suitable for the transportation of all kinds of heavy objects, which can be picked up, transported and deposited again in this way without risk, and with little strength required.

In the case of rolls of hard floor-covering there is the special added advantage of easy unrolling of the roll.

## Claims

1. Hand-driven mobile device for the transportation of heavy objects, in particular a roll of hard floor-covering, such as linoleum, comprising an underframe (A) supported by at least three wheels (1) and having an oblong-shaped carrying frame (B) for an object to be fastened therein, said carrying frame (B) having at one head end a supporting face (7) for the object, and said carrying frame (B) being supported in tilting fashing, but lockable in a forward and backward direction in the underframe (A), characterized in that the carrying frame (B) is supported not only in tilting fashion, but also in sliding fashion in the underframe (A), so that in a particular tilted position a horizontal edge of the supporting face (7) of the carrying frame (B) can be brought into contact with the ground and forms an axis of rotation, in such a way that on further tilting of the carrying frame (B) the latter slides relative to the underframe (A).

2. Device according to claim 1, characterized in that the underframe (A) has two slide bodies (11) lying in a horizontal line, and the carrying frame (B) has two guides (10) which can move along the slide bodies (11).

## Patentansprüche

1. Von Hand angetriebenes fahrbares Gerät für den Transport von schweren Gegenständen, insbesondere von einer Rolle mit hartem Fussbodenbelag, wie Linoleum, mit einem Unterrahmen (A), der von mindestens drei Rädern (1) abgestützt wird, und mit einem rechteckförmigen Tragerahmen (B) für ein darin zu befestigendes Objekt, wobei der Tragerahmen (B) an einem Kopfende eine Stützfläche (7) für das Objekt aufweist und wobei der Tragerahmen (B) in dem Unterrahmen (A) in eine Vorwärts- und Rückwärtsrichtung kippbar aber feststellbar gehalten ist, dadurch gekennzeichnet, dass der Tragerahmen (B) nicht nur kippbar, sondern auch verschiebbar in dem Unterrahmen (A) gehalten ist, so dass in einer bestimmten Kippstellung eine waagerechte Kante der Stützfläche (7) des Tragerahmens (B) mit dem Boden in Berührung gebracht werden kann und diese eine Drehachse bildet, derart, dass beim Weiterkippen des Tragerahmens (B) der letztere relativ zu dem Unterrahmen (A) sich verschiebt.

2. Vorrichtung nach Anspruch 1, dadurch gekennzeichnet, dass der Unterrahmen (A) zwei in einer waagerechten Linie liegende Gleitkörper (11) aufweist und der Tragerahmen (B) zwei Führungen (10) aufweist, die sich entlang der Gleitkörper (11) bewegen können.

## Revendications

1. Dispositif mobile, manœuvrable manuellement, pour le transport d'objets lourds, en particulier un rouleau de revêtement de sol dur, tel du linoléum, comprenant un châssis (A) supporté par au moins trois roues (1) et ayant un cadre porteur (B) de forme oblongue apte à assujettir intérieurement un objet, ledit cadre porteur (B) possédant à l'avant une face d'appui (7) pour l'objet, et ledit cadre porteur (B) étant supporté de façon inclinable, mais verrouillable sur le châssis (A) dans une direction de basculement vers l'avant et vers l'arrière, caractérisé en ce que le cadre porteur est supporté non seulement de façon inclinable, mais aussi de façon coulissante par le châssis (A), de sorte que, dans une position inclinée particulière, un bord horizontal de la face d'appui (7) du cadre porteur (B) puisse être amené au contact du sol et forme un axe de rotation, de telle manière que, en inclinant davantage le cadre porteur (B), ce dernier coulisse relativement au châssis (A).

2. Dispositif selon la revendication 1, caractérisé en ce que le châssis (A) comprend deux guides de coulissement (11) qui s'étendent selon une direction horizontale, et en ce que le cadre porteur (B) comprend deux glissières (10) qui peuvent se déplacer le long des guides de coulissement (11).

fig-1

fig-2

fig-3

fig-4

fig-5

Fig-6

fig-7